# EUROPEAN PATENT SPECIFICATION

(11) **EP 0 516 348 B1**
(45) Date of publication and mention of the grant of the patent: **20.09.1995**
(21) Application number: 92304646.0
(22) Date of filing: 21.05.1992
(51) Int. Cl.: B60T 8/36

(54) **Fluid pressure modulator valve apparatus**
Druckluftregelventil
Valve modulatrice pour fluide de pression

(30) Priority: 25.05.1991 GB 9111393
(43) Date of publication of application: 02.12.1992
(73) Proprietor: Knorr-Bremse Systems for Commercial Vehicles Limited, Kingswood, Bristol BS15 2NL (GB)
(72) Inventor: Hallett, Roger Charles, Tetbury, Gloucester (GB)
(74) Representative: Turner, Alan Reginald

(56) References cited:
- EP-A- 0 147 585
- EP-A- 0 307 579
- EP-A- 0 431 383
- FR-A- 2 267 913
- FR-A- 2 353 422
- PATENT ABSTRACTS OF JAPAN vol. 15, no. 6 (M-1066)8 January 1991

## Description

This invention relates to fluid pressure modulator valve apparatus and relates particularly to electrically operable modulator valve apparatus of a non-relay type.

Modulator valve apparatus of a non-relay type is used in particular for modulating the compressed air pressure applied to actuators of brakes of vehicle compressed air braking systems to minimise skidding of the wheels. In such systems operation of the brakes by the driver of the vehicle usually causes compressed air from one or more storage reservoirs to be transmitted, possibly via relay valves, to individual actuators for each of the braked wheels. Electrical sensor means may be provided for detecting the onset of excessive wheel deceleration and responsive thereto preventing further brake pressure increase and possibly also effecting brake pressure reduction. Such control may be effective on individual wheels or collectively and is typically achieved by one or more electrically operable fluid pressure modulator valves via which brake pressure is applied to the actuators.

Modulator valves of a non-relay type may comprise a first air pressure operable valve for communicating an input port to a delivery port connected to an actuator, a second pressure operable valve for connecting the delivery port to a vent and a first and second selectively electrically operable pilot valves for applying control pressures to the respective first and second valves. In order to interrupt increasing actuator pressure it is therefore necessary to energise the first pilot valve to cause the first control valve to 'hold' the delivered pressure. Moreover, in the event that an incipient skid condition persists it is additionally necessary to energise the second pilot valve to cause the second-control valve to vent some delivered pressure. Such control is usually effected in a cyclic manner by an electronic control unit and the electrical energisation for the pilot valves may be obtained from a vehicle stop-light circuit.

In the prior published Specification of European Patent Application No. 0 147 585 A, a brake pressure modulator is described which is of a non-relay type and has two fluid pressure operable diaphragm valves controlled by pilot pressures from respective magnet valves. One diaphragm valve provides interruption of a connection between an input port and a delivery port and the other diaphragm valve provides venting of the delivery port. In use of such apparatus it is necessary to provide control currents either selectively or in combination to each of said magnet valves.

The more modulator valves that are fitted the greater will be the electric current demand and this may limit the number of modulator valves that can be installed, particularly on a trailer.

In the prior published Specification of European Patent Application No. 0 307 579 A, there is described a solenoid controlled brake pressure relay valve arrangement and which recognises the desirability of minimising power requirements.

An object of the present invention is to provide improved modulator valve apparatus of a non-relay type which exhibits reduced current demand as compared with that foreseen above.

According to the present invention there is provided a fluid pressure modulator valve apparatus of a non-relay type having a fluid pressure input port, a fluid pressure delivery port and a vent port, a first fluid pressure operable valve for communicating the input port to the delivery port and a second fluid pressure operable valve for communicating the delivery port to the vent port said first and second fluid pressure operable valves being controllable by electrically operable pilot valve means, said pilot valve means receiving pressure from a fluid pressure source and comprising first and second selectively alternatively electrically operable two-position pilot valves characterised in that via both of said pilot valves in series, a control pressure from said fluid pressure source is selectively applied or interrupted to the first fluid pressure operable valve and via the first of which pilot valves said control pressure is selectively applied or interrupted to the second fluid pressure operable valve.

Preferably a check valve is provided permitting fluid pressure depletion from the delivery port to the input port.

Said fluid pressure operable valves may be diaphragm operable valves or one or both may be piston operable valves.

Preferably, with said two condition pilot valves not electrically-energised control pressure is applied to hold said first fluid pressure operable valve open and control pressure is applied to hold said second fluid pressure operable valve closed.

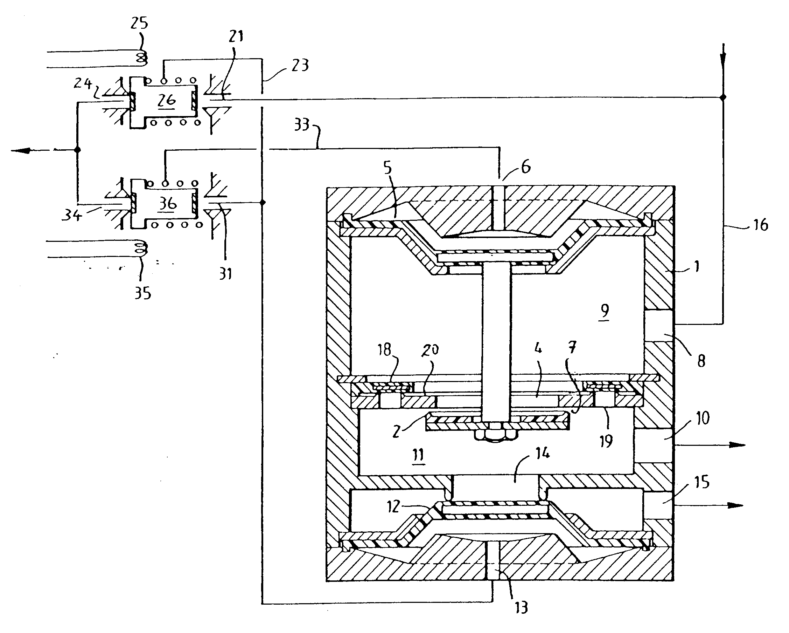

In order that the present invention may be more clearly understood and readily carried into effect the same will now be further described with reference to the accompanying drawing which is a schematic illustration of one embodiment of an electrically operable modulator valve apparatus in accordance with the invention.

Referring to the drawing, it may be mentioned at the outset that whilst fluid pressure operable control valves are shown in one housing but separately from their respective electrically operable pilot vales all these valves may be included in a single housing providing the necessary fluid pressure connections. Referring first to the fluid pressure operable control valves provided in the housing 1, the first valve has valve member 2 carried by a stem 3 and a diaphragm 5 to move axially in the housing, in response to pressure acting at a control port 6, towards and away from an aperture 4 in a dividing wall 20. Thus valve member 2 opens or closes a communication between a pressure input port 8 to a chamber 9 and a delivery port 10 from a chamber 11. The chamber 11 is further provided with a second fluid pressure control valve in the form of a further diaphragm 12 which acts, under the influence of a control pressure at a control port 13, to close an aperture 14 to interrupt a communication between the chamber 11 and a vent port 15.

The wall 20 between the chambers 11 and 9 forms a valve seat 7 for valve member 2 and is also provided with a flexible closure member 18 which normally covers a series of spaced apertures 19 thereby defining a check valve. This check valve permits air flow from chamber 11 to chamber 9 but not vice versa.

A compressed air pressure supply line 16 communicates a brake control pressure source (not shown) to the port 8 and also provides a pressure signal to an input port 21 of a first electrically operable 3- way two-position pilot valve 26. The valve 26 is preferably a solenoid valve with a spring biased double valve member 22 which maintains a communication between the input port 21 and an output line 23, whilst holding closed an exhaust port 24. Energisation of the solenoid, denoted by reference 25 therefore results in the input port 21 being closed off and the exhaust port 24 being opened to vent the line 23. The line 23 connected to port 13 is also connected to an input port 31 of a second electrically operable 3-way two-position pilot pressure valve 36 which is substantially identical to valve 26 the output line 33 of which is connected to port 6. When the solenoid of 36 denoted by reference 35 is energised the line 33 is thereby vented via vent port 24.

In operation of the modulator valve apparatus described with reference to the drawing, the pressure transmission paths between line 16 and ports 6 and 8 are such that pressure build up in chamber 9 does not overtake the pressure rise above diaphragm 5. Normal braking pressure to a wheel or group of wheels is therefore transmitted via line 16, port 8, chamber 9, opening 4, chamber 11 and port 10 to the respective actuator or actuators. On the occurrence of an incipient wheel skid condition, the electronic control unit (not shown) energises the solenoid 35 of valve 36 to vent the control pressure from the region above the diaphragm 5 and therefore the pressure in chamber 9 acts in a sense to close valve member 2 against the seat 7 to "hold" the delivered pressure via port 10 at the attained value. This pressure in chamber 11 can therefore only be depleted by leakage or by virtue of a reduction in the pressure in line 16 permitting back flow via the check valve formed by apertures 19 and member 18. If therefore in this "hold" condition the pressure in line 16 begins to reduce the delivered pressure in chamber 11 can reduce via the check valve. If the incipient wheel skid condition persists, the electronic control unit energises the solenoid 25 of the valve 26 whilst deenergising the solenoid 35 of valve 36. This results in the line 23 being vented via exhaust port 24 and removes control pressure form the underside of diaphragm 12 to vent the region 11 and the delivered pressure at port 10 via port 15. When the skidding condition has been corrected the electrical energisation of the pilot valve 26 or 36 is removed and the valves return to the condition shown.

In a complete system a respective modulator valve is provided for each wheel or group of wheels requiring individual skid control and from the foregoing it will be appreciated that by virtue of the in-series arrangement of the pilot valves 26 and 36 for the control of the first fluid pressure controlled valve member 2 it is no longer necessary for two solenoids for each modulator valve to be energised to effect a delivery pressure venting mode. Accordingly a reduced current demand is provided for in such a modulator valve.

Whilst in the embodiment of the invention which has been described in the foregoing, the first and second valves are each operated by fluid pressure acting on a diaphragm, one or each of these valve may be operated by fluid pressure acting on a respective suitable arranged piston if desired instead of the diaphragm 5 or the diaphragm 12.

## Claims

1. Fluid pressure modulator valve apparatus of a non-relay type having a fluid pressure input port (8), a fluid pressure delivery port (10) and a vent port (15), a first fluid pressure operable valve (4,7) for communicating the input port to the delivery port and a second fluid pressure operable valve (12,14) for communicating the delivery port to the vent port, said first and second fluid pressure operable valves being controllable by electrically operable pilot valve means, said pilot valve means receiving pressure from a fluid pressure source and comprising first and second selectively alternatively electrically operable two-position pilot valves (26,36) characterised in that via both of said pilot valves in series, a control pressure from said fluid pressure source is selectively applied or interrupted to the first fluid pressure operable valve (4,7) and via the first (26) of which pilot valves said control pressure is selectively applied or interrupted to the second fluid pressure operable valve (12,14).

2. Fluid pressure modulator valve apparatus as claimed in claim 1, characterised in that said source is a source of the fluid pressure to the input port (8).

3. Fluid pressure modulator valve apparatus as claimed in claim 1 or 2, characterised in that with said pilot valves (26;36) not electrically energised control pressure is applied to hold said first fluid pressure operable valve (4,7) open and control pressure is applied to hold said second fluid pressure operable valve (12,14) closed.

4. Fluid pressure modulator valve apparatus as claimed in claims 1, 2 or 3, characterised in that said first (4,7) and second (12,14) fluid pressure operable valves are provided in a single housing (1).

5. Fluid pressure modulator valve apparatus as claimed in claims 1, 2, 3 or 4, characterised in that check valve means (18,19) are provided permitting depleting fluid flow from the delivery port (10) to the input port (8).

6. Fluid pressure modulator valve apparatus as claimed in claim 1, 2, 3, 4, or 5, characterised in that said pilot valves (26;36) are double valves each having an input port (21;31), a delivery port and a vent port (24;34), in the electrically non-energised state providing direct communication between the input port (21;31) thereof and the delivery port thereof and in the electrically energised state providing isolation of the supply port thereof and venting of the delivery port thereof via the vent port (24;34).

## Patentansprüche

1. Fluiddruckmodulatorventilvorrichtung eines Nichtrelaistyps mit einer Fluiddruckeingangsöffnung (8), einer Fluiddruckabgabeöffnung (10) und einer Entlüftungs- bzw. Entlastungsöffnung (15), einem ersten durch Fluiddruck betätigbaren Ventil (4,7) zum Verbinden der Eingangsöffnung mit der Abgabeöffnung, und einem zweiten durch Fluiddruck betätigbaren Ventil (12,14) zum Verbinden der Abgabeöffnung mit der Entlüftungs- bzw. Entlastungsöffnung, wobei das erste und das zweite durch Fluiddruck betätigbare Ventil durch eine elektrisch betätigbare Pilotventileinrichtung steuerbar sind, die Druck von einer Fluiddruckquelle erholt und ein erstes und ein zweites Zweistellungspilotventil (26,36) aufweist, die in ausgewählter Weise alternativ elektrisch betätigbar sind,
dadurch gekennzeichnet,
daß über die beiden Pilotventile in Reihe ein Steuerdruck von der Fluiddruckquelle in ausgewählter Weise bzw. wahlweise an das erste durch Fluiddruck betätigbare Ventil (4,7) angelegt oder unterbrochen wird, und über das erste (26) der Pilotventile der Steuerdruck in ausgewählter Weise bzw. wahlweise an das zweite durch Fluiddruck betätigbare Ventil (12,14) angelegt oder unterbrochen wird.

2. Fluiddruckmodulatorventilvorrichtung nach Anspruch 1, dadurch gekennzeichnet, daß die genannte Quelle eine Quelle des Fluiddrucks zu der Eingangsöffnung (8) ist.

3. Fluiddruckmodulatorventilvorrichtung nach Anspruch 1 oder 2, dadurch gekennzeichnet, daß, wenn die Pilotventile (26;36)nicht elektrisch erregt sind, Steuerdruck angelegt wird, um das erste durch Fluiddruck betätigbare Ventil (4,7) offenzuhalten, und Steuerdruck angelegt wird, um das zweite durch Fluiddruck betätigbare Ventil (12,14) geschlossen zu halten.

4. Fluiddruckmodulatorventilvorrichtung nach den Ansprüchen 1, 2 oder 3, dadurch gekennzeichnet, daß das erste (4,7) und das zweite (12,14) durch Fluiddruck betätigbare Ventil in einem einzigen Gehäuse (1) vorgesehen sind.

5. Fluiddruckmodulatorventilvorrichtung nach den Ansprüchen 1, 2, 3 oder 4, dadurch gekennzeichnet, daß eine Rückschlagventileinrichtung (18,19) vorgesehen ist, die eine entleerende bzw. entlastende Fluidströmung von der Abgabeöffnung (10) zu der Eingangsöffnung (8) ermöglicht.

6. Fluiddruckmodulatorventilvorrichtung nach den Ansprüchen 1, 2, 3, 4 oder 5, dadurch gekennzeichnet, daß die Pilotventile (26;36) Doppelventile sind, deren jedes eine Eingangsöffnung (21;31), eine Abgabeöffnung und eine Entlüftungs- bzw. Entlastungsöffnung (24;34) hat, im elektrisch nicht erregten Zustand direkte Verbindung zwischen seiner Eingangsöffnung (21;31) und seiner Abgabeöffnung schafft und im elektrisch erregten Zustand Isolierung bzw. Trennung seiner Zufuhröffnung und Entlastung bzw. Entlüftung seiner Abgabeöffnung über die Entlastungs- bzw. Entlüftungsöffnung (24;34) schafft.

## Revendications

1. Appareil à vannes modulatrices de pression de fluide d'un type sans relais qui inclut
un passage d'entrée (8) de pression de fluide,
un passage de sortie (10) de pression de fluide et
un passage de mise à l'atmosphère (15),
une première vanne (4, 7) à mise en oeuvre par pression de fluide, capable d'établir une communication depuis le passage d'entrée vers le passage de sortie et
une deuxième vanne (12, 14) à mise en oeuvre par pression de fluide, capable d'établir une communication depuis le passage de sortie vers le passage de mise à l'atmosphère,
lesdites première et deuxième vannes à mise en oeuvre par pression de fluide pouvant être commandées par des vannes pilotes à mise en oeuvre électrique, lesdites vannes pilotes recevant une pression d'une source de pression de fluide et comprenant une première et une deuxième vannes pilotes (26, 36) à deux positions qui peuvent être commandées électriquement en alternance de façon sélective,
caractérisé en ce que
une pression de commande qui vient de ladite source de pression de fluide est appliquée ou interrompue sélectivement, par l'intermédiaire desdites deux vannes pilotes en série, à la première vanne (4, 7) à mise en oeuvre par pression de fluide et
ladite pression de commande est appliquée ou interrompue sélectivement, par l'intermédiaire de la première (26) desdites vannes pilotes, à la deuxième vanne (12, 14) à mise en oeuvre par pression de fluide.

2. Appareil à vannes modulatrices de pression de fluide selon la revendication 1, caractérisé en ce que
ladite source est une source de la pression de fluide fournie au passage d'entrée (8).

3. Appareil à vannes modulatrices de pression de fluide selon la revendication 1 ou 2, caractérisé en ce que, lorsque lesdites vannes pilotes (26; 36) ne sont pas excitées électriquement :
une pression de commande est appliquée de façon à maintenir ouverte ladite première vanne (4, 7) à mise en oeuvre par pression de fluide et
une pression de commande est appliquée pour maintenir fermée ladite deuxième vanne (12, 14) à mise en oeuvre par pression de fluide.

4. Appareil à vannes modulatrices de pression de fluide selon la revendication 1, 2 ou 3, caractérisé en ce que
lesdites première (4, 7) et deuxième (12, 14) vannes à mises en oeuvre par pression de fluide sont agencées dans un boîtier unique (1).

5. Appareil à vannes modulatrices de pression de fluide selon l'une des revendications 1, 2, 3 ou 4, caractérisé en ce que
des vannes de retenue (18, 19) sont agencées de manière à permettre un écoulement de baisse de pression de fluide depuis le passage de sortie (10) vers le passage d'entrée (8).

6. Appareil à vannes modulatrices de pression de fluide selon l'une des revendications 1, 2, 3, 4, ou 5, caractérisé en ce que
lesdites vannes pilotes (26; 36) sont des vannes doubles qui comprennent chacune un passage d'entrée (21; 31), un passage de sortie et un passage de mise à l'atmosphère (24; 34),
qui réalisent chacune, dans l'état électriquement non excité, une communication directe entre leur passage d'entrée (21; 31) et leur passage de sortie et
qui réalisent chacune, dans l'état électriquement excité, une isolation de leur passage d'entrée et une mise à l'atmosphère de leur passage de sortie par l'intermédiaire du passage de mise à l'atmosphère (24; 34).
